# EUROPEAN PATENT APPLICATION

(11) **EP 4 667 396 A1**
(43) Date of publication of application: **24.12.2025**
(21) Application number: 24826105.9
(22) Date of filing: 23.04.2024
(51) Int. Cl.: B65G 57/04, H01M 10/04

(54) **OBJECT LOADING FACILITY**

(30) Priority: 19.06.2023 KR 20230078331
(71) Applicant: LG Energy Solution, Ltd., Seoul 07335 (KR)
(72) Inventor: KIM, Hyun Jung, Daejeon 34122 (KR); BAEK, Ju Hwan, Daejeon 34122 (KR); KEUM, Dong Yeon, Daejeon 34122 (KR); KIM, Jung Won, Daejeon 34122 (KR)
(74) Representative: Goddar, Heinz J.
(86) International application number: PCT/KR2024/005460
(87) International publication number: WO 2024/262782

(57) **Abstract**

An object loading facility of the present invention includes a loading device configured to adsorb an object disposed in a supply section and load the object in a loading section, wherein the loading device includes: a stator provided as an electromagnet and having a circular traveling path that sequentially passes through the supply section and the loading section; a mover that is repeatedly circulated between the supply section and the loading section by an interaction with magnetic fields generated in the stator; a loading part continuously passing through the supply section and the loading section together with the mover and provided with an adsorption plate configured to adsorb the object in the supply section and load the object in the loading section; and a pressing part configured to allow the loading part passing through the supply section to move toward the object so that the adsorption plate of the loading part is in close contact with the object.

## Description

### TECHNICAL FIELD

### CROSS-REFERENCE TO RELATED APPLICATION

The present application claims the benefit of the priority of Korean Patent Application No. 10-2023-0078331, filed on June 19, 2023, which is hereby incorporated by reference in its entirety.

### TECHNICAL FIELD

The present invention relates to an object loading facility in which an object (load) is adsorbed using a linear motor system (LMS) to load the object in a loading section. Particularly, the present invention relates to an object loading facility that is capable of more stably adsorbing an object.

### BACKGROUND ART

In general, secondary batteries refer to chargeable and dischargeable batteries, unlike primary batteries that are impossible to be charged. The secondary batteries are being widely used in advanced electronic devices such as phones, laptop computers, and camcorders.

In addition, the secondary batteries may be classified in various manners depending on a structure of an electrode assembly. For example, secondary batteries may be classified into a stacked type structure, a wound type (jelly roll-type) structure, and a stacking/folding type structure.

The above-described secondary battery includes an electrode assembly, an electrolyte, and a case that accommodates the electrode assembly and the electrolyte. The electrode assembly includes one or more radical units, and each of the radical units has a structure in which a positive electrode and a negative electrode are alternately arranged with a separator therebetween.

A method for manufacturing a secondary battery having such a structure includes a process of manufacturing a radical unit, a process of transferring and stacking the radical unit, a process of alternately disposing the radical unit and a separator to manufacture an electrode assembly, and a process of accommodating the electrode assembly to manufacture a secondary battery.

Here, in the process of stacking the radical unit, a conveyor that transfers the radical unit and a loading box in which the radical unit falling from the conveyor is loaded are used.

However, since the conveyor is used in the method for manufacturing the secondary battery according to the related art, the configuration of the facility is complicated, and there is a problem in that an individual position and speed of the object are not controlled.

### DISCLOSURE OF THE INVENTION

### TECHNICAL PROBLEM

An object of the present invention is to provide an object loading facility in which a configuration of the facility is simplified using a linear motor system (LMS), and an individual position and speed of an object are controlled, particularly, the object is stably adsorbed to be transferred.

### TECHNICAL SOLUTION

An object loading facility of the present invention may include a loading device configured to adsorb an object disposed in a supply section and load the object in a loading section, wherein the loading device may include: a stator provided as an electromagnet and having a circular traveling path that sequentially passes through the supply section and the loading section; a mover that is repeatedly circulated between the supply section and the loading section by an interaction with magnetic fields generated in the stator; a loading part continuously passing through the supply section and the loading section together with the mover and provided with an adsorption plate configured to adsorb the object in the supply section and load the object in the loading section; and a pressing part configured to allow the loading part passing through the supply section to move toward the object so that the adsorption plate of the loading part is in close contact with the object. Thus, the loading part may stably adsorb the object disposed in the supply section.

The pressing part may include: a stopper which is provided on the mover to be movable toward the object and to which the loading part is coupled; and a pressing member provided on the stator disposed in the supply section and configured to press the stopper passing through the supply section so that the loading part moves toward the object. Thus, while the loading part moves toward the object, the loading part may be in effectively close contact with the object to adsorb the object.

The mover may include: a magnetic part installed on the stator and configured to be repeatedly circulated between the supply section and the loading section by the interaction with the magnetic fields generated in the stator; and a coupling part having a coupling groove to which the stopper is coupled to be movable toward the object.

The stopper may include: a support part pressed toward the object by the pressing member when passing through the supply section; and a movable part which is coupled to the coupling groove to be movable toward the object and to which the loading part is coupled.

The pressing part may further include an elastic member provided between the mover and the stopper and configured to allow the stopper to return to its original position through elastic force. Thus, the loading part passing through the supply section may move in a state of stably returning to its original position.

The pressing member may be provided as a pressing roller. Thus, the pressing member may be in rolling contact with the stopper to press the stopper without noise.

The pressing roller may be provided in plurality in a direction in which the mover is circulated within the supply section. Thus, the loading part may be maintained in the pressed state while passing through the supply section.

An edge of the stopper, which faces the pressing roller, may be provided as an inclined surface. Thus, frictional force between the pressing roller and the stopper may be minimized to prevent the noise from being generated, and the stopper may gradually descend or ascent to improve adsorption force of the object and prevent the adsorbed object from being separated.

The pressing member may be coupled to the stator so that a position of the pressing member is adjustable toward the object. Thus, a distance between the stopper and the pressing member may be adjusted, and as a result, the stopper may be adjusted to be more stably pressed.

The object loading facility may further include a transfer device configured to supply the object to the supply section.

### ADVANTAGEOUS EFFECTS

In the object loading facility of the present invention, the configuration of the facility may be simplified, and the individual position and speed of the object may be controlled, particularly, the object may be stably adsorbed to be transferred.

### BRIEF DESCRIPTION OF THE DRAWINGS

FIG. 1 is a schematic process view illustrating an object loading facility of the present invention.
FIG. 2 is a design view illustrating the object loading facility of the present invention.
FIG. 3 is a design view illustrating a loading device provided in the object loading facility of the present invention.
FIG. 4 is a design view illustrating a transfer device provided in the object loading facility of the present invention.
FIG. 5 is a view illustrating a stator and a mover in the loading device of the object loading facility of the present invention.
FIG. 6 is a schematic view illustrating an interaction between the stator and the mover of the object loading facility of the present invention.
FIG. 7 is a front view illustrating a pressing part of the object loading facility of the present invention.
FIG. 8 is a plan view illustrating the pressing part of the object loading facility of the present invention.
FIG. 9 is a cross-sectional view illustrating a loading part of the object loading facility of the present invention.
FIG. 10 is a perspective view illustrating a coupling state of the mover and a stopper of the object loading facility of the present invention.
FIG. 11 is a front view illustrating a state in which the stopper is not pressed by a pressing member in the object loading facility of the present invention.
FIG. 12 is a front view illustrating a state in which the stopper is pressed by the pressing member in the object loading facility of the present invention.
FIG. 13 is a front view illustrating another embodiment of the object loading facility of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Object Loading Facility]

An object loading facility of the present invention has a structure that is applied to a linear motor system (LMS). Thus, an object may be adsorbed to minimize a loss of vacuum, and a transfer and speed of the object may be controlled to improve a supply speed of the object.

In particular, the object loading facility of the present invention may have a structure that stably adsorbs the object disposed in a supply section to increase in adsorption power of the object. As a result, when the object is transferred, an accident in which the object unintentionally fall down may be prevented in advance.

Hereinafter, the object loading facility of the present invention will be described in detail with reference to the attached drawings.

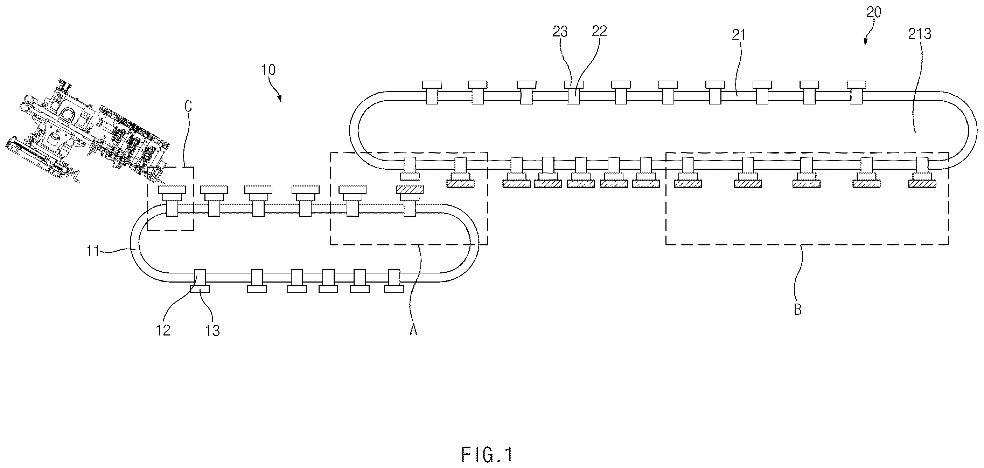

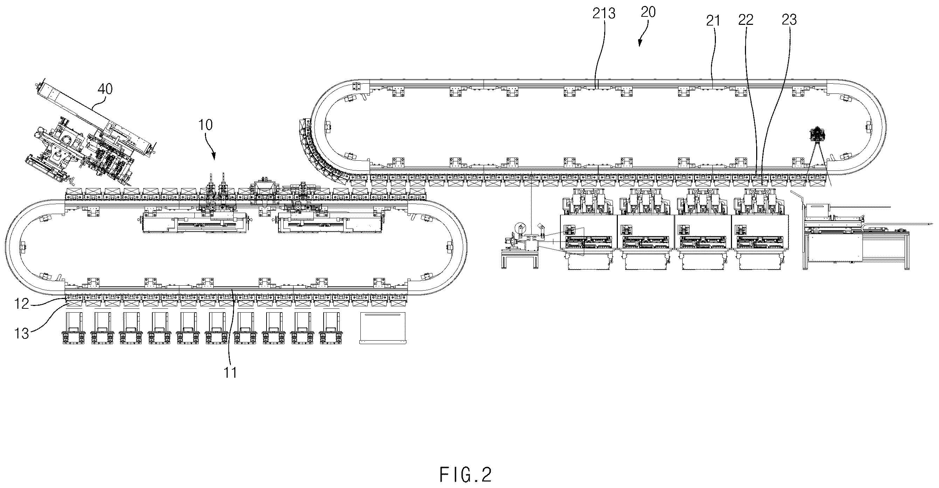

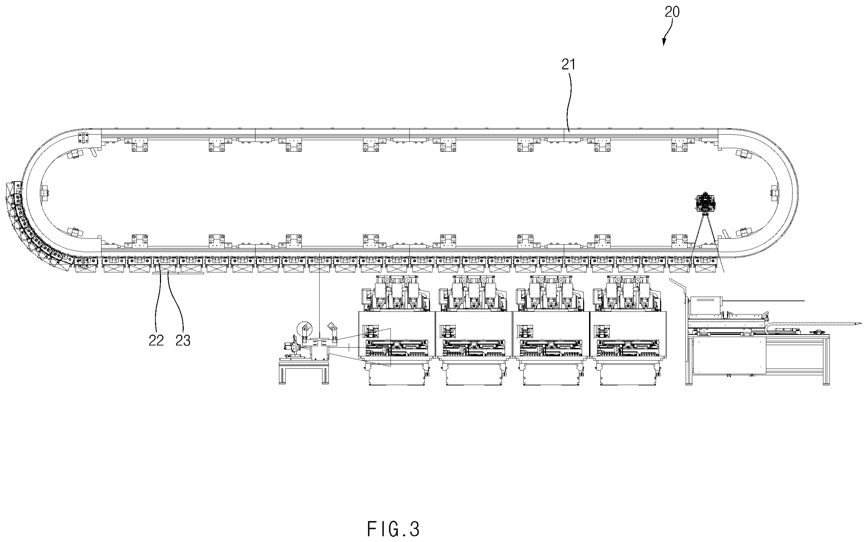

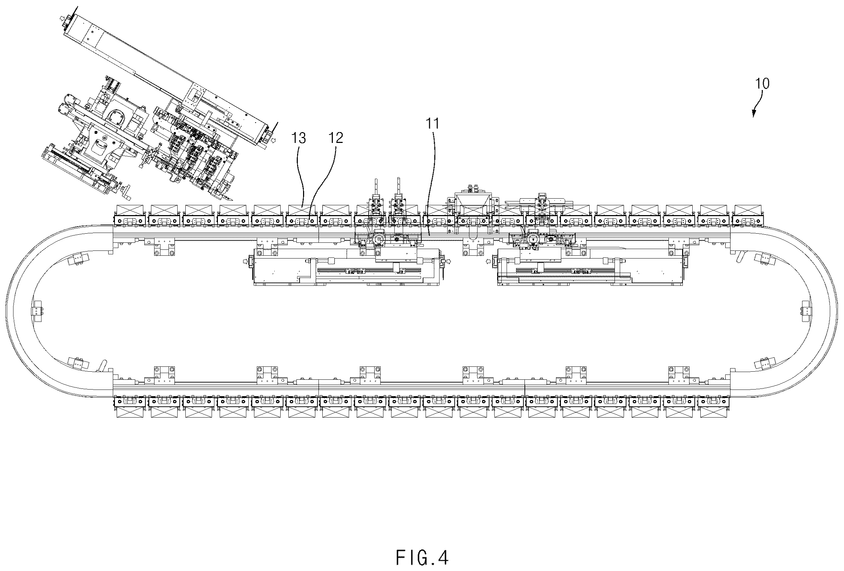

FIG. 1 is a schematic process view illustrating an object loading facility of the present invention, FIG. 2 is a design view illustrating the object loading facility of the present invention, FIG. 3 is a design view illustrating a loading device provided in the object loading facility of the present invention, and FIG. 4 is a design view illustrating a transfer device provided in the object loading facility of the present invention.

As illustrated in FIGS. 1 to 4, an object loading facility of the present invention includes a transfer device 10 that supplies an object 1 to a supply section A, and a loading device 20 that loads the object 1 supplied to the supply section A by the transfer device to a loading section B.

### Transfer Device

As illustrated in FIGS. 1 and 3, the transfer device 10 is configured to transfer the object 1 disposed in a setting section C to the supply section A.

Since the transfer device 10 will be described in detail below, detailed description thereof will be omitted here.

### Loading Device

The loading device 20 has a structure that adsorbs an object disposed in the supply section to load the object in the loading section B. That is, the loading device 20 includes a stator 21, a mover 22, a loading part 23, and a pressing part 24.

The stator 21 has a structure in which a plurality of rails are connected to have a circular traveling path passing through the supply section A and the loading section B. That is, the plurality of rails have a structure connected in the form of the circular traveling path, such as a track in an athletics stadium.

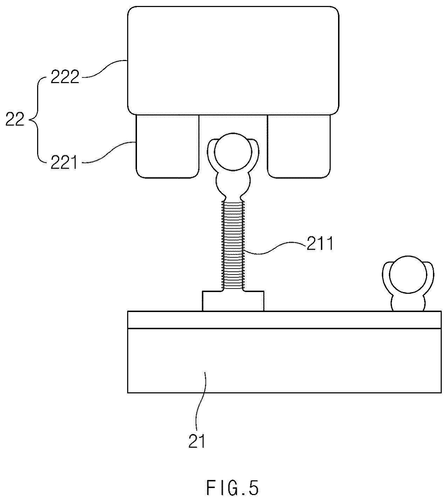

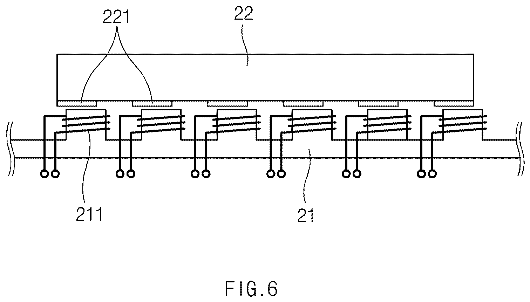

FIG. 5 is a view illustrating the stator and the mover in the loading device of the object loading facility of the present invention, and FIG. 6 is a schematic view illustrating an interaction between the stator and the mover of the object loading facility of the present invention.

As illustrated in FIGS. 5 and 6, the plurality of rails include an electromagnetic coil 211 which is provided in a direction of the circular traveling path and is an electromagnet. In addition, the mover 22 corresponding to the rails includes a magnetic part 221 provided with an N pole and an S pole. That is, the mover 22 is circulated along the rails through driving force generated by a mutual operation between the electromagnetic coil 211 of the rails and the magnetic part 221 of the mover 22. This uses a principle of the linear motor system.

The stator 21 includes a first linear guide a first linear guide on which a straight rail is connected from the supply section A to the loading section B, a second linear guide on which a curved rail is connected from the loading section B to a first point, a third linear guide on which a straight rail is connected from the first point to a second point, and a fourth linear guide on which a curved rail is connected from the second point to the supply section A. Thus, the mover 22 may be circulated while sequentially passing through the first to fourth linear guides of the stator 21. Here, the mover 22 may pass at a first speed when passing through the first linear guide, and the mover 22 may pass at a second speed that is faster than the first speed when passing through the second to fourth linear guides.

The stator 21 further includes a base part 213 that supports the plurality of rails to have the circular traveling path. That is, the base part 213 has the same shape as the track of the athletics stadium, and the plurality of rails are supported on an outer circumferential surface to form the circular traveling path.

The mover 22 is movably installed on the stator 21, and has a structure that is repeatedly circulated between the supply section A and the loading section B by an interaction with magnetic fields generated by the stator 21. Here, the mover 22 includes a magnetic part 221 provided with an N pole and an S pole.

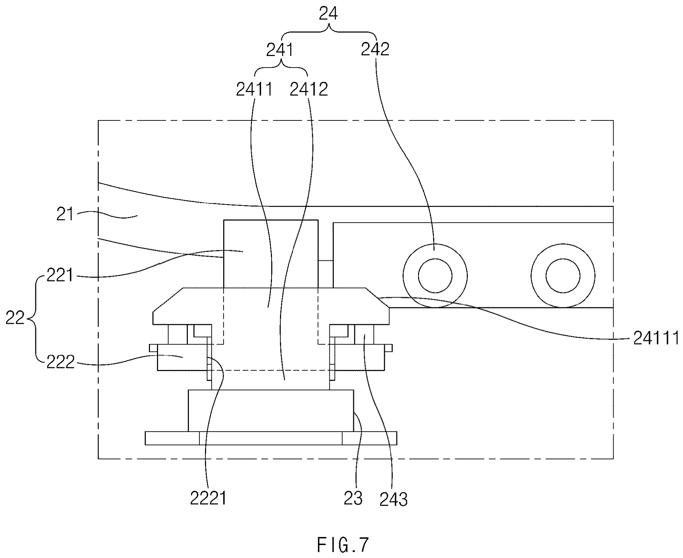

FIG. 7 is a front view illustrating a pressing part of the object loading facility of the present invention.

That is, referring to FIG. 7, when current is applied to the electromagnetic coil 211 of the stator 21, electromagnetic force acts on the electromagnetic coil by the interaction with the magnetic fields generated in the electromagnetic coil of the stator 21, and the mover 22 receives the driving force by the electromagnetic force, and thus, the mover 22 moves along the stator 21. Here, if the current applied to the electronic coil 211 is large, the moving speed of the mover 22 increases, and if the current is small, the moving speed of the mover 22 decreases. As described above, the moving speed of the mover 22 may be adjusted.

For example, the mover 22 includes a magnetic part 221 installed on the stator 21 and repeatedly circulated between the supply section A and the loading section B by the interaction with the magnetic fields generated in the stator 21, and a coupling part 222 which is provided on a front end of the magnetic part 221 and in which a coupling groove 2221, to which the stopper is movably coupled toward the object 1 (downward direction when viewed in FIG. 7) is defined.

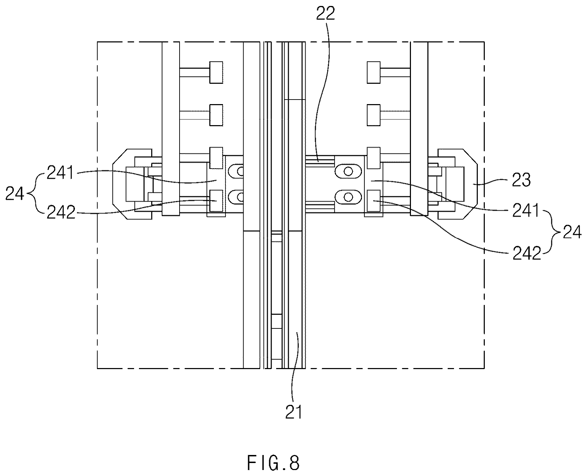

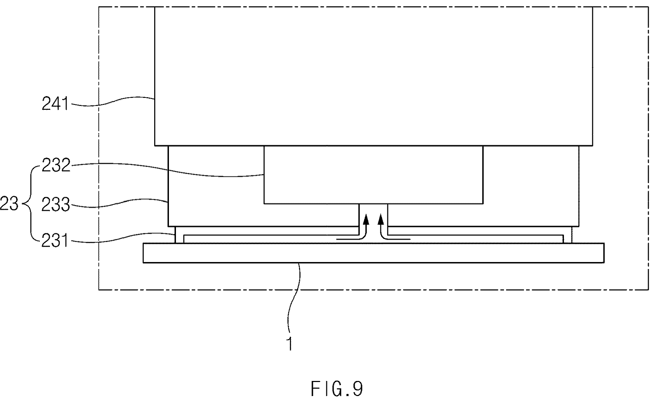

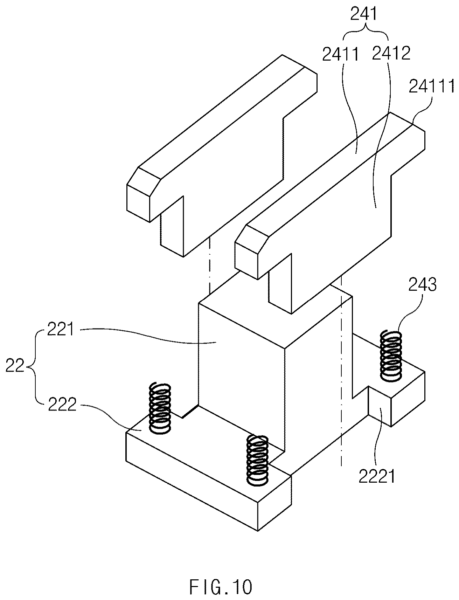

FIG. 8 is a plan view illustrating the pressing part of the object loading facility of the present invention, FIG. 9 is a cross-sectional view illustrating the loading part of the object loading facility of the present invention, and FIG. 10 is a perspective view illustrating a coupling state of the mover and the stopper of the object loading facility of the present invention.

Here, referring to FIG. 10, the coupling groove 2221 is provided at each of both sides of the coupling part, which correspond to each other.

The loading part 23 has a structure that adsorbs the object 1 in the supply section A and then allow the object 1 to drop in the loading section B.

That is, as illustrated in FIG. 9, the loading part 23 has an adsorption plate 231 that adsorbs the object 1 in the supply section A through suction force, a suction machine 232 that suctions air of the adsorption plate 231 to generate the suction force, and a fixing member 223 that fixes the adsorption plate 231 to the mover 22.

The loading part 23 may be detachably coupled to the mover 22. For example, the loading part 23 and the mover 22 may be detachably coupled to each other through a coupling structure of the groove and a protrusion. Thus, compatibility may be improved by replacing the loading part 23 coupled to the mover depending on the object 1.

In the related art, an accident, in which the adsorption plate of the loading part 23 is not in stably contact with the object and thus does not adsorb the object or weakly adsorbs the object to cause falling of the object during the transfer of the object, frequently occurs.

Particularly, a secondary battery, in which the electrode assembly and the electrolyte are accommodated, is described as an embodiment of the object 1. However, since the secondary battery accommodates the electrolyte, if the adsorption plate 231 is not in close contact with a surface of a pouch, the secondary battery may not be stably adsorbed.

To solve this problem, the object loading facility of the present invention includes a structure in which the loading part 23 moves toward the object 1 to increase in adhesion between the loading part 23 and the object 1, thereby stably adsorbing the object 1.

That is, the object loading facility of the present invention may include a pressing part 24 so that the adsorption plate 231 is in close contact with the surface of the pouch in a pressed state, and thus, the adsorption plate 231 may stably adsorb the pouch to prevent the secondary battery from falling during the transfer of the secondary battery.

For example, the pressing part 24 allows the loading part 23 passing through the supply section A to move toward the object 1 so that the adsorption plate 231 of the loading part 23 is in close contact with the object 1, preferably so that the adsorption plate 231 is in close contact with the object 1 in the pressed state.

That is, the pressing part 24 may press the loading part 23 passing through the supply section A to allow the loading part 23 to move toward the object 1 disposed in the supply section A, thereby improving the adhesion while the adsorption plate 231 of the loading part 23 is pressed in close contact with the surface of the object 1 disposed in the supply section A.

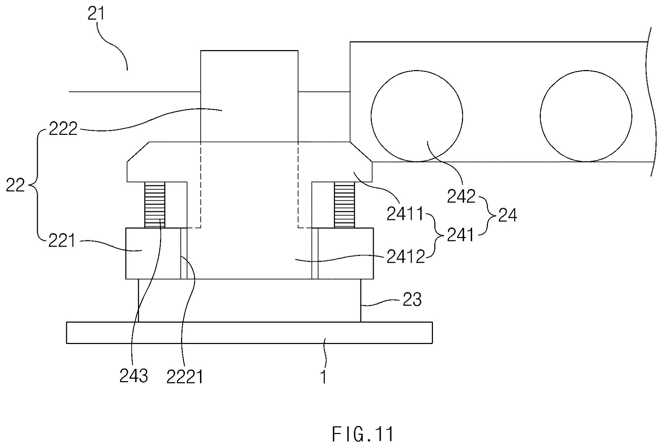

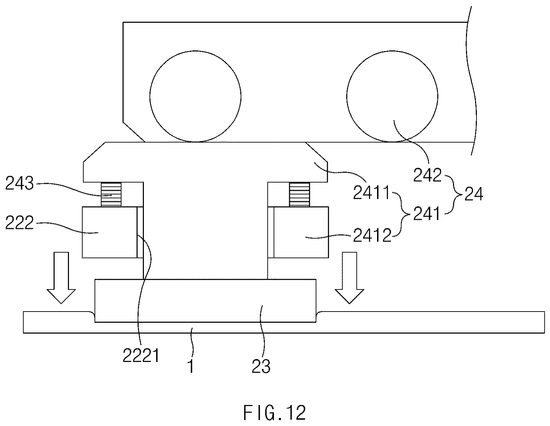

FIG. 11 is a front view illustrating a state in which the stopper is not pressed by a pressing member in the object loading facility of the present invention, and FIG. 12 is a front view illustrating a state in which the stopper is pressed by the pressing member in the object loading facility of the present invention.

As described above, this pressing part 24 includes a stopper 241 which is movably coupled to the mover 22 in the direction toward the object and to which the loading part 23 is coupled to a lower end thereof, and a pressing member 242 provided on the stator 21 disposed in the supply section A and pressing the stopper 241 passing through the supply section A to allow the loading part 23 to move toward the object 1.

The stopper 241 includes a support part 2411 that is pressed toward the object 1 by the pressing member 242 when passing through the supply section A, and a movable part 2412 which is coupled to the coupling groove 2221 to be movable toward the object 1 and to which the loading part 23 is coupled to a lower end thereof.

As described above, the pressing part may press the loading part 23 toward the object 1 so that the adsorption plate 231 is in close contact with the surface of the object 1 in the supply section A in the pressed state, and thus, the adhesion between the adsorption plate 231 and the object 1 may be improved to stably adsorb the object 1 by the loading part 23.

The press member 242 may be provided as a pressing roller, and the pressing roller may be provided in plurality at set intervals in a direction in which the mover 22 is circulated within the supply section A. Thus, the stopper 241 passing through the supply section A may be continuously pressed.

An edge of the stopper 241 facing the pressure roller (edge of a top surface of the stopper 241 as shown in FIG. 11) may be provided as an inclined surface 24111. Thus, as the pressure roller is guided along the inclined surface 24111 of the stator, frictional force between the pressure roller and the stopper 241 may be minimized, and rolling contact may be induced to prevent noise from being generated and also may induce gradually ascending and descending of the stopper 241 to prevent vibration from being generated.

The pressing part 24 may further include an elastic member 243 that allows the stopper 241 passing through the supply section A to return to its original position.

The elastic member 243 may be provided between the mover 22 and the stopper 241 and store elastic force while being pressed by the stopper 241 in the supply section A. When the stopper 241 passes through the supply section A, the stopper 241 may return to its original position through the stored elastic force. The elastic member 243 may be a coil spring.

Thus, the object loading facility of the present invention may include the pressing part 24 to stably adsorb the object 1 and prevent an accident in which the object 1 falls unintentionally while transferring the object 1.

The transfer device 10 may have the same structure as the loading device 20 using the linear motor system (LMS). That is, the transfer device 10 has a structure capable of adsorbing the object 1 disposed in the setting section C and then supplying the object 1 to the supply section A.

For example, the transfer device 10 includes a second stator 11, a second mover 12, and a second loading part 13, as illustrated in FIGS. 1 and 4.

The second stator 11 has a rail structure in which a plurality of electromagnetic coils are arranged at regular intervals so as to have a circular traveling path that sequentially pass through the setting section C and the supply section A, into which the object 1 is supplied. In addition, the second mover 12 includes a magnet provided with an N pole and an S pole. That is, the second mover 12 is circulated in one direction (counterclockwise direction as seen in FIG. 1) along the stator by the driving force generated by the interaction with the electromagnetic coil of the second stator 11.

The second movable member 12 is movably installed on the second stator 11 and has a structure that is repeatedly circulated between the setting section C and the supply section A by an interaction with magnetic fields generated in the second stator 11.

As illustrated in FIG. 1, when current is applied to the electromagnetic coil of the second stator 11, the electromagnetic force acts on the electromagnetic coil due to the interaction with the magnetic fields generated in the second stator 11, and due to this electromagnetic force, the second mover 12 receives the driving force, and the second mover 12 moves along the electromagnetic coil of the second stator 11. Here, if the current applied to the electronic coil is large, the moving speed of the second mover 12 increases, and if the current is small, the moving speed of the second mover 12 decreases.

The second loading part 13 is fixed to the second mover 12 and has a structure that adsorbs the object 1 in the setting section C and then dispose the object 1 in the supply section A.

Since the second loading part 13 has the same structure as the loading part described above, detailed description will be omitted.

Thus, the object loading facility of the present invention may stably adsorb the object disposed in the supply section A, and thus, the object may be stably transferred to the loading section B and then be loaded.

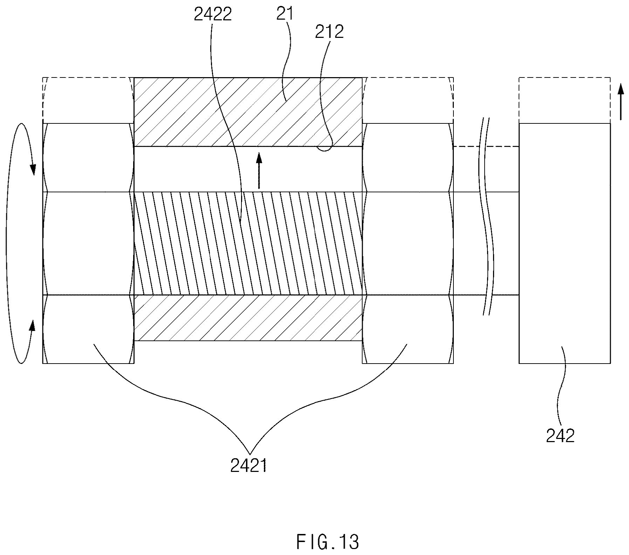

FIG. 13 is a front view illustrating another embodiment of the object loading facility of the present invention.

In the object loading facility of the present invention, as illustrated in FIG. 13, the pressing member 242 of the loading device may be coupled to the stator so that a position of the pressing member 242 is adjustable in a direction toward the object 1.

That is, a long hole 212 is defined in the stator disposed in the supply section A in the direction toward the object 1. Here, the long hole 212 is defined to be elongated in a vertical direction when viewed in FIG. 13, and the pressing member 242 is provided with a coupling piece 2422 which passes through the long hole 212 and to which a nut 2421 is coupled.

Therefore, the pressing member 242 may descend or ascend toward the object 1 within the long hole 212 and may be fixed by tightening the nut 2421. In this manner, the position of the pressing member 242 provided on the stator may be adjusted. As a result, the position of the pressing member 242 may be adjusted based on the stopper 241, and a distance and adhesion between the adsorption plate 231 and the object 1 may be adjusted.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

1: Object
10: Transfer device
11: Second stator
12: Second mover
13: Second loading part
20: Loading device
21: Stator
211: Electromagnetic coil
212: Long hole
213: Base part
22: Mover
221: Magnetic part
222: Coupling part
2221: Coupling groove
23: Loading part
231: Adsorption plate
232: Suction machine
233: Fixing member
24: Pressing part
241: Stopper
2411: Support part
24111: Inclined surface
2412: Movable part
242: Pressing member
2421: Nut
2422: Coupling piece
243: Elastic member

## Claims

1. An object loading facility comprising a loading device configured to adsorb an object disposed in a supply section and load the object in a loading section,
wherein the loading device comprises:
a stator provided as an electromagnet and having a circular traveling path that sequentially passes through the supply section and the loading section;
a mover that is repeatedly circulated between the supply section and the loading section by an interaction with magnetic fields generated in the stator;
a loading part continuously passing through the supply section and the loading section together with the mover and provided with an adsorption plate configured to adsorb the object in the supply section and load the object in the loading section; and
a pressing part configured to allow the loading part passing through the supply section to move toward the object so that the adsorption plate of the loading part is in close contact with the object.

2. The object loading facility of claim 1, wherein the pressing part comprise:
a stopper which is provided on the mover to be movable toward the object and to which the loading part is coupled; and
a pressing member provided on the stator disposed in the supply section and configured to press the stopper passing through the supply section so that the loading part moves toward the object.

3. The object loading facility of claim 2, wherein the mover comprises:
a magnetic part installed on the stator and configured to be repeatedly circulated between the supply section and the loading section by the interaction with the magnetic fields generated in the stator; and
a coupling part having a coupling groove to which the stopper is coupled to be movable toward the object.

4. The object loading facility of claim 3, wherein the stopper comprises:
a support part pressed toward the object by the pressing member when passing through the supply section; and
a movable part which is coupled to the coupling groove to be movable toward the object and to which the loading part is coupled.

5. The object loading facility of claim 2, wherein the pressing part further comprises an elastic member provided between the mover and the stopper and configured to allow the stopper to return to its original position through elastic force.

6. The object loading facility of claim 2, wherein the pressing member is provided as a pressing roller.

7. The object loading facility of claim 6, wherein the pressing roller is provided in plurality in a direction in which the mover is circulated within the supply section.

8. The object loading facility of claim 6, wherein an edge of the stopper, which faces the pressing roller, is provided as an inclined surface.

9. The object loading facility of claim 2, wherein the pressing member is coupled to the stator so that a position of the pressing member is adjustable toward the object.

10. The object loading facility of claim 1, further comprising a transfer device configured to supply the object to the supply section.
